# EUROPEAN PATENT APPLICATION

(11) **EP 2 234 089 A1**
(43) Date of publication of application: **29.09.2010**
(21) Application number: 08720610.8
(22) Date of filing: 26.03.2008
(51) Int. Cl.: G09B 29/00, G01C 21/00

(54) **MAP DATA CREATING DEVICE AND MAP DRAWING DEVICE**

(71) Applicant: Mitsubishi Electric Corporation, Tokyo 100-8310 (JP)
(72) Inventor: FUKUDA, Kazuma, Tokyo 100-8310 (JP)
(74) Representative: Pfenning, Meinig & Partner GbR
(86) International application number: PCT/JP2008/000731
(87) International publication number: WO 2009/118781

(57) **Abstract**

A node thinning-out means 12 for carrying out a process of thinning out nodes constructing line segments included in map data, the nodes excluding branch points, according to a scale to be created which is smaller than a specific scale is disposed. A hierarchical graph component 13 groups the nodes on which the thinning-out process has not been performed yet and the nodes on which the thinning-out process has been performed by the node thinning-out unit 12 into hierarchical layers according to the scale, and creates connection destination information showing nodes to which each node belonging to each of the hierarchical layers is connected.

## Description

### Field of the Invention

The present invention relates to a map data creating device that creates map data corresponding to a plurality of scales, and a map drawing device that draws a map having a desired scale according to the map data created by the map data creating device.

### Background of the Invention

A conventional map data creating device carries out a thinning-out process of thinning out nodes included in map data about a map having a specific scale according to a rule set up in advance in order to prepare map data about maps having a plurality of scales (refer to patent reference 1).

For example, a conventional map drawing device mounted in a car navigation device can store map data about maps having a plurality of scales created by a conventional map data creating device in a memory and select map data about a map having a scale specified by a user in order to be able to draw the map having the scale specified by the user (refer to patent reference 2).
The conventional map drawing device can thus draw a map having any one of a plurality of scales by preparing map data about the maps having the plurality of scales beforehand, though the data volume of the map data becomes huge because the conventional map drawing device has to prepare map data about each of the scales.

To solve this problem, a map data creating device which expresses a relation between nodes included in map data about a map having a specific scale and thinned-out nodes by using a tree structure in order to be able to draw a map having any one of a plurality of scales from the single map data without preparing map data about each of the scales has been developed (refer to patent reference 3).

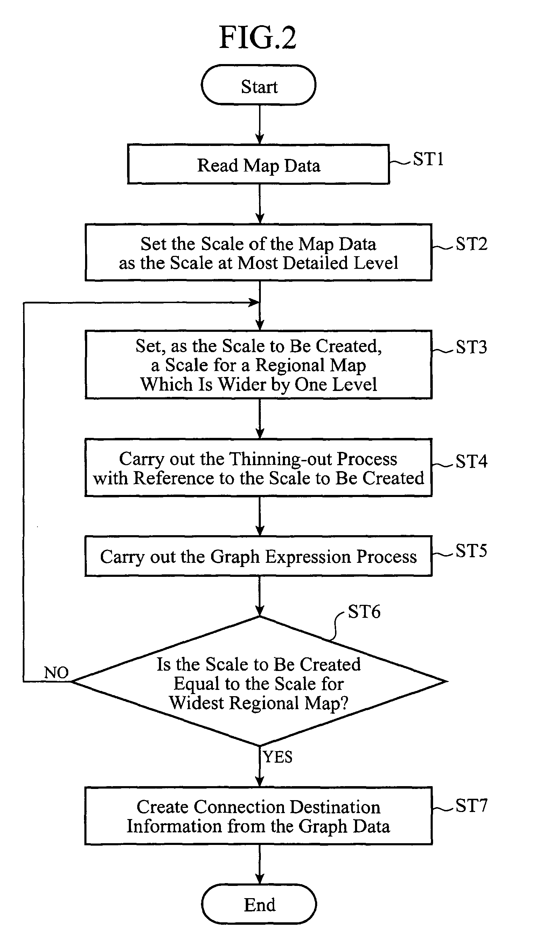

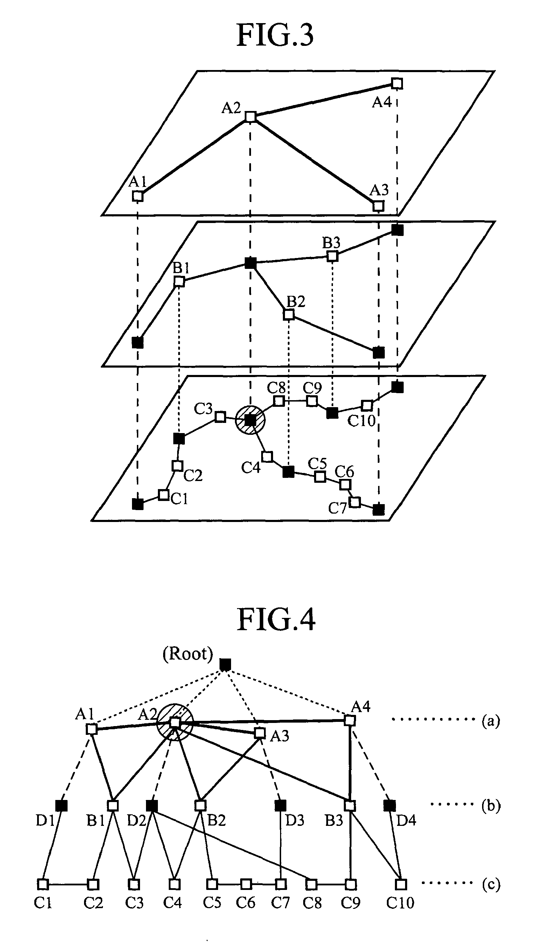

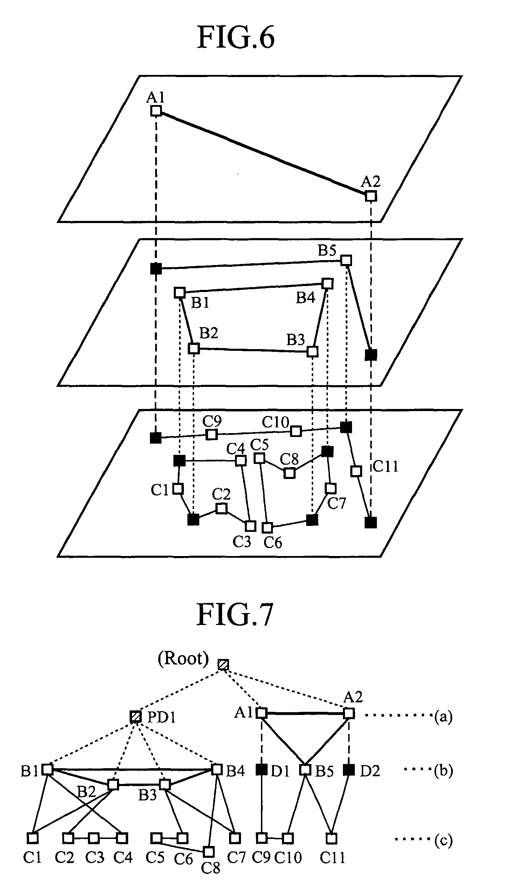

[Patent reference 1] JP,7-37067,A (pp. 2 to 4, and Figs. 4, 6 and 7)
[Patent reference 2] JP,2001-117488,A (pp. 3 and 4, and Fig. 7)
[Patent reference 3] JP,2000-29383,A (pp. 7 to 9, and Figs. 2 to 7)

Because the conventional map data creating device is constructed as mentioned above, the conventional map data creating device can draw a map having any one of a plurality of scales from single map data without preparing map data about a map having each of the scales.
A problem is, however, that only expression of a relation between nodes included in map data about a map having a specific scale and thinned-out nodes by using a tree structure cannot express complicated-shaped roads such as a road having a branch point, and complicated-shaped geographical features, for example.

The present invention is made in order to solve the above-mentioned problem, and it is therefore an object of the present invention to provide a map data creating device that can create map data which can support a plurality of scales and express complicated-shaped roads and complicated-shaped geographical features.
It is another object of the present invention to provide a map drawing device that can draw complicated-shaped roads and complicated-shaped geographical features with a desired scale.

### Description of the Invention

A map data creating device includes a node thinning-out means for carrying out a process of thinning out nodes constructing line segments included in map data, the nodes excluding branch points, according to a scale to be created which is smaller than the specific scale, and a connection destination information creating means groups the nodes on which the thinning-out process has not been performed yet and the nodes on which the thinning-out process has been performed by the node thinning-out means into hierarchical layers according to the scale, and creates connection destination information showing nodes to which each node belonging to each of the hierarchical layers is connected.

Therefore, the present invention offers an advantage of being able to create map data which can support a plurality of scales and express complicated-shaped roads and complicated-shaped geographical features.

### Brief Description of the Figures

[Fig. 1] Fig. 1 is a block diagram showing a map drawing device in accordance with Embodiment 1 of the present invention;
[Fig. 2] Fig. 2 is a flow chart showing the descriptions of a process carried out by a map data creating device 1 in accordance with Embodiment 1 of the present invention;
[Fig. 3] Figs. 3(a) and 3(b) are explanatory drawings showing nodes on which a thinning-out process has been performed by a node thinning-out unit 12, and Fig. 3(c) is an explanatory drawing showing the nodes on which the thinning-out process has not been performed yet by the node thinning-out unit 12;
[Fig. 4] Fig. 4 is an explanatory drawing showing a graph expressed by a hierarchical graph forming unit 13 (a connection relation among nodes belonging to each hierarchical layer);
[Fig. 5] Fig. 5 is an explanatory drawing showing connection destination information created by a data converting unit 14;
[Fig. 6] Figs. 6(a) and 6(b) are explanatory drawings showing nodes on which a thinning-out process has been performed by a node thinning-out unit 12, and Fig. 6(c) is an explanatory drawing showing the nodes on which the thinning-out process has not been performed yet by the node thinning-out unit 12;
[Fig. 7] Fig. 7 is an explanatory drawing showing a graph expressed by a hierarchical graph forming unit 13 (a connection relation among nodes belonging to each hierarchical layer) ; and
[Fig. 8] Fig. 8 is an explanatory drawing showing connection destination information created by a data converting unit 14. Preferred Embodiments of the Invention

Hereafter, in order to explain this invention in greater detail, the preferred embodiments of the present invention will be described with reference to the accompanying drawings. Embodiment 1.

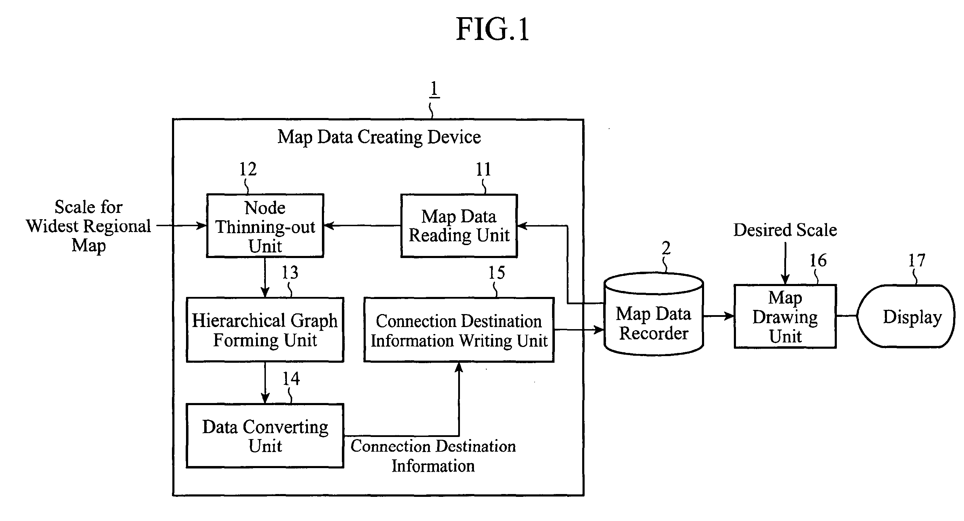

Fig. 1 is a block diagram showing a map drawing device in accordance with Embodiment 1 of the present invention. The map data creating device 1 shown in the figure can support a plurality of scales, and create map data with which complicated-shaped roads and complicated-shaped geographical features can be expressed.

A map data recorder 2 is a memory for recording map data about a map having a specific scale which is reference data, and storing the map data created by the map data creating device 1.
A map data reading unit 11 is an input interface for reading the map data about the map having the specific scale from the map data recorder 2. The map data reading unit 11 constructs a map data acquiring means.

A node thinning-out unit 12 is provided with an interface for accepting a setting of a scale for widest regional map, and carries out a process of thinning out the nodes constructing the line segments included in the map data read by the map data reading unit 11, the nodes excluding branch points, according to a scale to be created which is smaller than the specific scale. The node thinning-out unit 12 constructs a node thinning-out means.

A hierarchical graph forming unit 13 carries out a process of grouping the nodes on which the thinning-out process has not been performed yet and the nodes on which the thinning-out process has been performed by the node thinning-out unit 12 into hierarchical layers according to the scale, and expressing a connection relation between nodes belonging to each of the hierarchical layers by using a graph.
A data converting unit 14 carries out a process of converting data about the graph formed by the hierarchical graph forming unit 13 into data in a predetermined form, and creating connection destination information showing nodes to which each node belonging to each of the hierarchical layers is connected.
A connection destination information creating means is comprised of the hierarchical graph forming unit 13 and the data converting unit 14.

A connection destination information writing unit 15 is an output interface for writing the connection destination information created by the data converting unit 14, as map data, in the map data recorder 2.
The map drawing unit 16 is provided with an interface for accepting a specification of a desired scale, and carries out a process of referring to connection destination information about nodes belonging to a hierarchical layer corresponding to the desired scale, the connection destination information being included in the connection destination information recorded in the map data recorder 2, and drawing a map on a display 17 of, for example, a car navigation device. The map drawing unit 16 constructs a map drawing means.

Fig. 2 is a flow chart showing the descriptions of a process carried out by the map data creating device 1 in accordance with Embodiment 1 of the present invention.
Fig. 3 is an explanatory drawing showing nodes on which the thinning-out process has not been performed yet, and the nodes on which the thinning-out process has been performed by the node thinning-out unit 12.
Fig. 4 is an explanatory drawing showing a graph expressed by the hierarchical graph forming unit 13 (a connection relation among nodes belonging to each hierarchical layer).

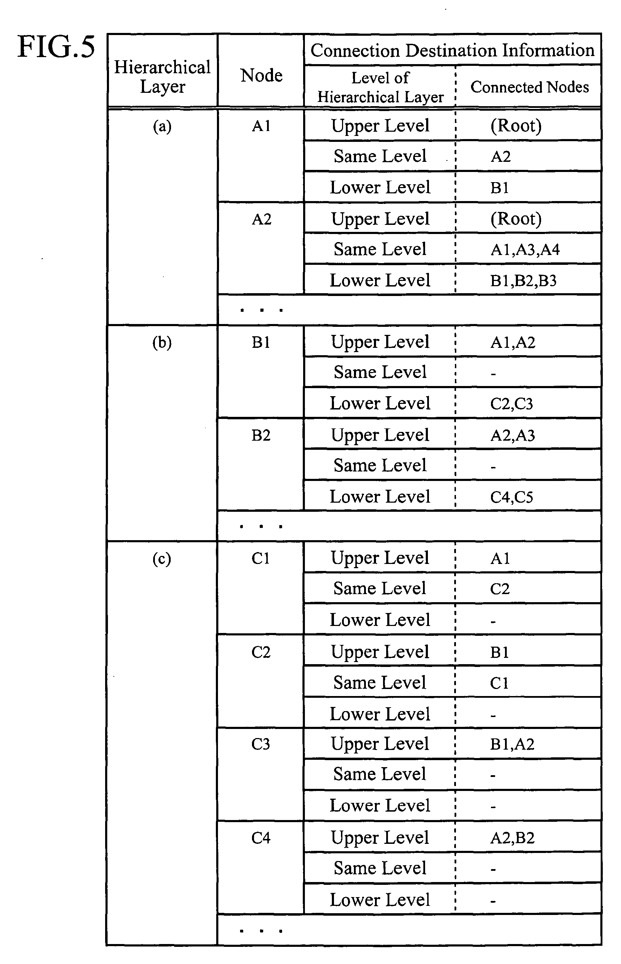

Fig. 5 is an explanatory drawing showing the connection destination information created by the data converting unit 14.

Next, the operation of the map data creating device will be explained.
The map data reading unit 11 of the map data creating device 1 reads the map data about the map having the specific scale which are the reference from the map data recorder 2 (step ST1 of Fig. 2), and outputs the map data to the node thinning-out unit 12.
The map data include information about each node which constructs a line segment, and this information about each node includes coordinate data showing the position of each node.

When receiving the map data from the map data reading unit 11, the node thinning-out unit 12 sets the scale of the map data as the largest scale at the most detailed level (step ST2).
The node thinning-out unit 12 accepts a setting of a scale for widest regional map, and sets, as a scale to be created, a scale for a regional map which is wider than, by one level, that with the largest scale at the most detailed level, i.e., a scale smaller than the largest scale by one level (a scale larger than or equal to the scale for widest regional map) (step ST3).
In the example of Fig. 3, the scale shown in (c) is set as the largest scale at the most detailed level, the scale shown in (a) is set as the scale for widest regional map, and the scale shown in (b) is set as the scale to be created which is initially set.

After the scale to be created is set, the node thinning-out unit 12 carries out the thinning-out process of thinning out the nodes constructing the line segments included in the map data outputted from the map data reading unit 11, the nodes excluding branch points, according to the scale to be created (step ST4).
Although any method of determining the nodes to be removed can be used, the nodes to be removed can be determined according to, for example, both the scale to be created and the distance between adjacent nodes.
More specifically, a reference distance corresponding to the scale to be created (the smaller scale to be created is set, the larger distance value is selected as the reference distance) is compared with the distance between any two adjacent nodes, and, when the distance between two adjacent nodes is smaller than the reference distance, either one of the two adjacent nodes is decided as a target node to be removed.

Because the scale shown in Fig. 3(b) is set as the scale to be created at this time, the thinning-out process is performed on the nodes shown in Fig. 3(c).
In the example of Fig. 3(c), the nodes C1 to C10 are determined as the target for the thinning-out process, the seven nodes designated by ■ remain without being determined as the target for the thinning-out process.

After the node thinning-out unit 12 carries out the thinning-out process of thinning out the nodes, the hierarchical graph forming unit 13 carries out a process of grouping the nodes on which the thinning-out process has not been performed yet and the nodes on which the thinning-out process has been performed by the node thinning-out unit 12 into hierarchical layers according to the scale, and expressing a connection relation among nodes belonging to each of the hierarchical layers by using a graph (step ST5).
Because the scale shown in Fig. 3(b) is set as the initial scale to be created and the nodes C1 to C10 have been removed at this time, the nodes C1 to C10 are classified as those belonging to the lowest hierarchical layer and are arranged in the lowest hierarchical layer, as shown in Fig. 4(c).
Because the seven nodes (the nodes A1 to A4 and B1 to B3) designated by ■ in Fig. 3(c) are the ones which have not been removed at this time, they are not classified as those belonging to the lowest hierarchical layer.

After arranging the nodes C1 to C10 in the lowest hierarchical layer, the hierarchical graph forming unit 13 expresses the connection relation among the nodes C1 to C10 by using a graph.
For example, because the node C2 has a connection relation with the node C1 in the same hierarchical layer, the hierarchical graph forming unit connects between the node C1 and the node C2 with a line. Furthermore, because the node C2 has a connection relation with the node B1 in an upper hierarchical layer, the hierarchical graph forming unit connects between the node C2 and the node B1 with a line.
For example, because the node C8 has a connection relation with the node C9 in the same hierarchical layer, the hierarchical graph forming unit connects between the node C8 and the node C9 with a line. Furthermore, because the node C8 has a connection relation with the node A2 in the highest hierarchical layer (which is higher than the layer of the node C8 by two levels) while the node A2 is not classified as those belonging to the upper layer which is higher than the layer of the node C8 by one level, the hierarchical graph forming unit connects between the node C8 and a dummy node D2 (will be mentioned below) which is placed in the upper layer which is higher than the layer of the node C8 by one level with a line.
By then doing in the same way, the hierarchical graph forming unit expresses the connection relation among all the nodes arranged in the lowest hierarchical layer by using a graph.

After the hierarchical graph forming unit 13 arranges the nodes C1 to C10 in the lowest hierarchical layer and then expresses the connection relation among the nodes C1 to C10 by using a graph, the node thinning-out unit 12 determines whether or not the scale to be created is the scale for widest regional map (step ST6).
At this time, the node thinning-out unit determines that the scale to be created is the scale shown in Fig. 3(b), and is not the scale for widest regional map.

After determining that the scale to be created is not the scale for widest regional map, the node thinning-out unit 12 sets, as a new scale to be created, a scale for a regional map which is wider than that with the previous scale to be created by one level (step ST3).
In the example of Fig. 3, the node thinning-out unit sets, as the scale to be created, the scale shown in Fig. 3(a) (the scale for widest regional map).

After setting, as the scale to be created, the scale shown in Fig. 3(a), the node thinning-out unit 12 carries out the thinning-out process of thinning out the nodes shown in Fig. 3(b) and excluding branch points according to the scale to be created (step ST4).
At this time, because the scale shown in Fig. 3(a) is set as the scale to be created, the node thinning-out unit performs the thinning-out process on the nodes shown in Fig. 3(b).
In the example of Fig. 3(b), the nodes B1 to B3 are determined as the target for the thinning-out process, the four nodes designated by ■ remain without being determined as the target for the thinning-out process.

After the node thinning-out unit 12 carries out the thinning-out process of thinning out the nodes, the hierarchical graph forming unit 13 carries out the process of grouping the nodes on which the thinning-out process has not been performed yet and the nodes on which the thinning-out process has been performed by the node thinning-out unit 12 into hierarchical layers according to the scale, and expressing a connection relation among nodes belonging to each of the hierarchical layers by using a graph (step ST5).
Because the scale shown in Fig. 3(a) is set as the scale to be created and the nodes B1 to B3 have been removed at this time, the nodes B1 to B3 are classified as those belonging to a middle hierarchical layer and are arranged in the middle hierarchical layer, as shown in Fig. 4(b).

Because the three levels of scale are provided in the example of Fig. 3, the four nodes (the nodes A1 to A4) designated by □; in Fig. 3(b) are automatically classified as those belonging to the highest hierarchical layer and are arranged in the highest hierarchical layer.
Because the four nodes (the nodes A1 to A4) designated by □; in Fig. 3(b) are classified as those belonging to the highest hierarchical layer, and the nodes C1, C3, C4, C7, C8, and C10 having a connection relation with the nodes A1 to A4 are then apart from the nodes A1 to A4 by two hierarchical layers, dummy nodes D1, D2, D3, and D4 are arranged in the middle hierarchical layer on behalf of the four nodes A1 to A4.

After arranging the nodes B1 to B3 and the dummy nodes D1 to D4 in the middle hierarchical layer and then arranging the nodes A1 to A4 in the highest hierarchical layer, the hierarchical graph forming unit 13 expresses the connection relation among the nodes B1 to B3, the dummy nodes D1 to D4 and the nodes A1 to A4 by using a graph.
For example, because the node B1 has a connection relation with the nodes A1 and A2 in the highest hierarchical layer, the hierarchical graph forming unit connects between the node B1 and each of the nodes A1 and A2 with a line. Furthermore, because the node B1 has a connection relation with the nodes C2 and C3 in the lower hierarchical layer, the hierarchical graph forming unit connects between the node B1 and each of the nodes C2 and C3 with a line.
For example, because the dummy node D2 has a connection relation with the node A2 in the upper hierarchical layer, the hierarchical graph forming unit connects between the dummy node D2 and the node A2 with a line. Furthermore, because the dummy node D2 has a connection relation with the nodes C3, C4 and C8 in the lower hierarchical layer, the hierarchical graph forming unit connects between the dummy node D2 and each of the nodes C3, C4 and C8 with a line.

For example, because the node A2 has a connection relation with the nodes A1, A3 and A4 in the same hierarchical layer, the hierarchical graph forming unit connects between the node A2 and each of the nodes A1, A3 and A4 with a line. Furthermore, because the node A2 has a connection relation with the nodes B1, B2 and B3 and the dummy node D2 in the lower hierarchical layer, the hierarchical graph forming unit connects between the node A2 and each of the nodes B1, B2 and B3 and the dummy node D2 with a line. In addition, because the node A2 is in the highest hierarchical layer, the hierarchical graph forming unit connects between the node A2 and the (root) node with a line.
By then doing in the same way, the hierarchical graph forming unit expresses the connection relation among all of the nodes arranged in the middle hierarchical layer and those in the highest hierarchical layer by using a graph.

After the hierarchical graph forming unit 13 arranges the nodes B1 to B3 and the dummy nodes D1 to D4 in the middle hierarchical layer and also arranges the nodes A1 to A4 in the highest hierarchical layer, and then expresses the connection relation among the nodes B1 to B3, the dummy nodes D1 to D4 and the nodes A1 to A4 by using a graph, the node thinning-out unit 12 determines whether or not the scale to be created is the scale for widest regional map (step ST6).
At this time, because the scale to be created is the scale shown in Fig. 3(a), the node thinning-out unit determines that the scale to be created is the scale for widest regional map and makes a transition to a process of step ST7.

After the hierarchical graph forming unit 13 expresses the connection relation among all the nodes by using a graph, the data converting unit 14 converts data about the graph (data showing the arrangement of each of the nodes and data showing the connection relation among the nodes) into data in a predetermined form to create connection destination information as shown in Fig. 5 (step ST7).
The connection destination information shows nodes to which each node belonging to each of the hierarchical layers is connected, as shown in Fig. 5, and includes information showing the levels (an upper level, the same level, and a lower level) of hierarchical layers in each of which a node to which each node belonging to each of the hierarchical layers is connected is placed.

For example, the connection destination information about the node C1 belonging to the lowest hierarchical layer shows that the node C1 is connected to the node C2 in the same hierarchical layer and is also connected to the node A1 in the highest hierarchical layer.
Although the node C1 is expressed in the graphic expression of Fig. 4 in such a way that the node C1 is connected to the dummy node D1 in order to clarify the connection relation and hierarchical relation between the nodes, the connection destination information of Fig. 5 shows that the node C1 is connected to the node A1 which is the substance of the dummy node D1 because it is necessary to specify the node actually connected to the node C1.

After the data converting unit 14 creates the connection destination information, the connection destination information writing unit 15 stores the connection destination information in the map data recorder 2 as map data.
The map drawing unit 16 is provided with the interface for accepting a specification of a desired scale, and refers to the connection destination information about each of nodes belonging to the hierarchical layer corresponding to the desired scale, the connection destination information being included in the connection destination information recorded in the map data recorder 2, to draw a map on the display 17.
For example, when the scale shown in Fig. 3(c) is specified, the map drawing unit refers to the connection destination information about each of the nodes C1 to C10 belonging to the lowest hierarchical layer. More specifically, the map drawing unit checks nodes placed in the same hierarchical layer as that in which the nodes C1 to C10 are arranged, and connected to each of the nodes C1 to C10, and the nodes in the upper hierarchical layers to draw a map having the scale shown in Fig. 3(c).

When the scale shown in Fig. 3(b) is specified, the map drawing unit refers to the connection destination information about each of the nodes B1 to B3 belonging to the middle hierarchical layer. More specifically, the map drawing unit checks nodes placed in the same hierarchical layer as that in which the nodes B1 to B3 are arranged, and connected to each of the nodes B1 to B3, and the nodes in the upper hierarchical layer to draw a map having the scale shown in Fig. 3(b).
When the scale of Fig. 3(a) is specified, the map drawing unit refers to the connection destination information about each of the nodes A1 to A4 belonging to the highest hierarchical layer. More specifically, the map drawing unit checks nodes placed in the same hierarchical layer as that in which the nodes A1 to A4 are arranged, and connected to each of the nodes A1 to A4 to draw a map having the scale shown in Fig. 3(a).

As can be seen from the above description, the map data creating device in accordance with this Embodiment 1 includes the node thinning-out means 12 for carrying out the process of thinning out the nodes constructing the line segments included in the map data, the nodes excluding branch points, according to the scale to be created, and the hierarchical graph component 13 is configured in such a way as to group the nodes on which the thinning-out process has not been performed yet and the nodes on which the thinning-out process has been performed by the node thinning-out unit 12 into hierarchical layers according to the scale, and create connection destination information showing nodes to which each node belonging to each of the hierarchical layers is connected. Therefore, this embodiment offers an advantage of being able to create map data which can support a plurality of scales and express complicated-shaped roads and complicated-shaped geographical features.

Furthermore, the map drawing device in accordance with this Embodiment 1 is configured in such a way as to refer to connection destination information about each of nodes belonging to a hierarchical layer corresponding to a desired scale, the connection destination information being included in the connection destination information recorded in the map data recorder 2, to draw a map on the display 17. Therefore, this embodiment offers another advantage of being able to express complicated-shaped roads such as a road having a branch point, and complicated-shaped geographical features with a desired scale.

### Embodiment 2.

In above-mentioned Embodiment 1, the case in which a line segment included in the map data can have a branch is shown, though the map data creating device 1 and the map drawing device shown in Fig. 1 can also be applied to a case in which a closed region disposed independently from other line segments are included in the map data.

Fig. 6 is an explanatory drawing showing nodes on which the thinning-out process has not been performed yet, and the nodes on which the thinning-out process has been performed by the node thinning-out unit 12.
Fig. 7 is an explanatory drawing showing a graph expressed by the hierarchical graph forming unit 13(a connection relation among nodes belonging to each hierarchical layer).

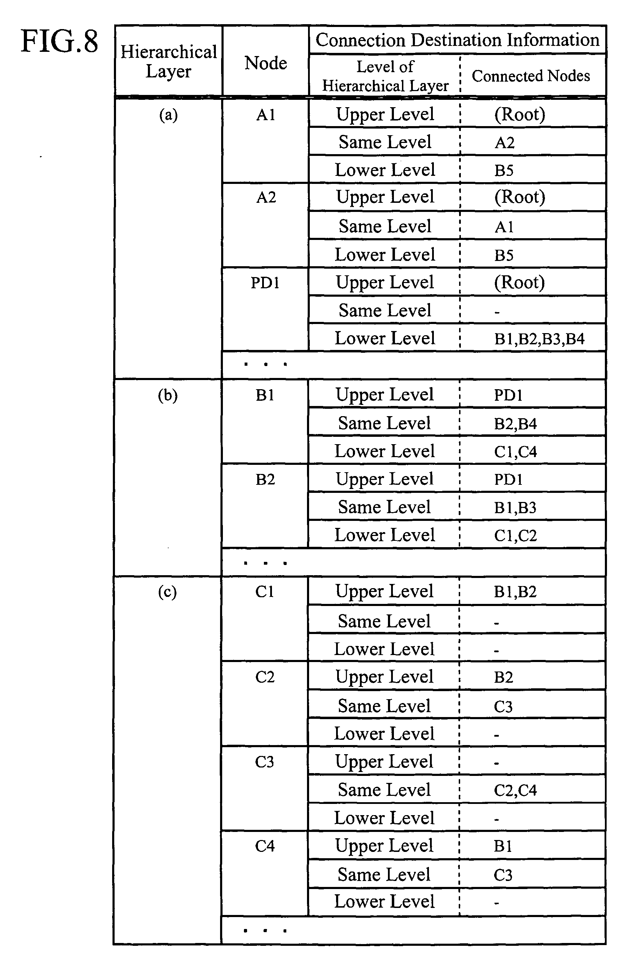

Fig. 8 is an explanatory drawing showing connection destination information created by the data converting unit 14.

The descriptions of the process carried out by the map data creating device 1 and the map drawing device shown in Fig. 1 will be explained hereafter. An example in which two closed regions (e.g., two closed regions corresponding to blocks respectively), as well as one line segment, are included in the map data which are recorded, as map data about a map having a specific scale used as reference, in the map data recorder 2 as shown in Fig. 6(c) will be explained.
The map data reading unit 11 of the map data creating device 1 reads the map data about the map having the specific scale used as reference from the map data recorder 2 (step ST1 of Fig. 2), and outputs the map data to the node thinning-out unit 12.
The map data include information about each node which constructs a line segment, and this information about each node includes coordinate data showing the position of each node.

When receiving the map data from the map data reading unit 11, the node thinning-out unit 12 sets the scale of the map data as the largest scale at the most detailed level (step ST2).
The node thinning-out unit 12 also accepts a setting of a scale for widest regional map, and sets, as a scale to be created, a scale at a higher level from the largest scale at the most detailed level by one level, i.e., a scale smaller than the largest scale by one level) (a scale larger than or equal to the scale for widest regional map) (step ST3).
In the example of Fig. 6, the scale shown in (c) is set as the largest scale at the most detailed level, the scale shown in (a) is set as the scale for widest regional map, and the scale shown in (b) is set as the scale to be created which is initially set.

After the scale to be created is set, the node thinning-out unit 12 carries out the thinning-out process of thinning out the nodes constructing the line segments included in the map data outputted from the map data reading unit 11, the nodes excluding branch points, according to the scale to be created (step ST4).
Although any method of determining the nodes to be removed can be used, the nodes to be removed can be determined according to, for example, both the scale to be created and the distance between adjacent nodes.
More specifically, a reference distance corresponding to the scale to be created (the smaller scale to be created is set, the larger distance value is selected as the reference distance) is compared with the distance between any two adjacent nodes, and, when the distance between two adjacent nodes is smaller than the reference distance, either one of the two adjacent nodes is decided as a target node to be removed .

Because the scale shown in Fig. 6(b) is set as the scale to be created at this time, the thinning-out process is performed on the nodes shown in Fig. 6(c).
In the example of Fig. 6(c), in the line segments formed of the nodes C9, C10, C11 and so on, the nodes C9, C10 and C11 are determined as the target for the thinning-out process and the three nodes designated by ■ remain without being determined as the target for the thinning-out process.

Furthermore, in the case of drawing a map of a wide area (drawing a map with the scale to be created), because a boundary between two adjacent closed regions (e.g., a boundary between the nodes C4 and C5 and a boundary between the nodes C3 and C6) is very narrow and it is therefore difficult to carry out accurate drawing of the boundary, the two closed regions are unified.
In the example of Fig. 6(c), the nodes C1 to C8 are determined as the target for the thinning-out process, the four nodes designated by ■ remain without being determined as the target for the thinning-out process.
As a result, as shown in Fig. 6(b), one closed region is formed of the four nodes (the nodes B1 to B4) designated by ■.
When determining whether or not the boundary between two closed regions is very narrow, for example, a reference distance corresponding to the scale to be created (the smaller scale to be created is set, the larger distance value is selected as the reference distance) is compared with the distance of the boundary, and it can be determined that the boundary is very narrow when the distance of the boundary is smaller than the reference distance.

After the node thinning-out unit 12 carries out the thinning-out process of thinning out the nodes, the hierarchical graph forming unit 13 carries out the process of grouping the nodes on which the thinning-out process has not been performed yet and the nodes on which the thinning-out process has been performed by the node thinning-out unit 12 into hierarchical layers according to the scale, and expressing a connection relation between a hierarchical layer to which each of the nodes belongs and the nodes by using a graph (step ST5), like that of above-mentioned Embodiment 1.
Because the scale shown in Fig. 6(b) is set as the initial scale to be created and the nodes C1 to C11 have been removed at this time, the nodes C1 to C11 are classified as those belonging to a lowest hierarchical layer and are arranged in the lowest hierarchical layer, as shown in Fig. 7(c).
Because the seven nodes (the nodes A1 to A2 and B1 to B4) designated by ■ in Fig. 6(c) are the ones which have not been removed at this time, the seven nodes are not classified as those belonging to the lowest hierarchical layer.

After arranging the nodes C1 to C11 in the lowest hierarchical layer, the hierarchical graph forming unit 13 expresses the connection relation among the nodes C1-C11 by using a graph.
For example, because the node C2 has a connection relation with the node C3 in the same hierarchical layer, the hierarchical graph forming unit connects between the node C2 and the node C3 with a line. Furthermore, because the node C2 has a connection relation with the node B2 in an upper hierarchical layer, the hierarchical graph forming unit connects between the node C2 and the node B2 with a line.
For example, because the node C9 has a connection relation with the node C10 in the same hierarchical layer, the hierarchical graph forming unit connects between the node C9 and the node C10 with a line. Furthermore, because the node C9 has a connection relation with the node A1 in the highest hierarchical layer (which is higher than the layer of the node C9 by two levels) while the node A1 is not classified as those belonging to the upper layer which is higher than the layer of the node C9 by one level, the hierarchical graph forming unit connects between the node C9 and a dummy node D1 which is arranged in the upper layer which is higher than the layer of the node C9 by one level with a line.
By then doing in the same way, the hierarchical graph forming unit expresses the connection relation among all the nodes arranged in the lowest hierarchical layer by using a graph.

After the hierarchical graph forming unit 13 arranges the nodes C1 to C11 in the lowest hierarchical layer and then expresses the connection relation among the nodes C1 to C11 by using a graph, the node thinning-out unit 12 determines whether or not the scale to be created is the scale for widest regional map (step ST6), like that of above-mentioned Embodiment 1.
At this time, the node thinning-out unit determines that the scale to be created is the scale shown in Fig. 6(b), and is not the scale for widest regional map.

After determining that the scale to be created is not the scale for widest regional map, the node thinning-out unit 12 sets, as a new scale to be created, a scale for a regional map which is wider than that with the previous scale to be created by one level (step ST3).
In the example of Fig. 6, the node thinning-out unit sets, as the scale to be created, the scale shown in Fig. 6(a) (the scale for widest regional map).

After setting, as the scale to be created, the scale shown in Fig. 6(a), the node thinning-out unit 12 carries out the thinning-out process of thinning out the nodes shown in Fig. 6(b) and excluding branch points according to the scale to be created (step ST4).
At this time, because the scale shown in Fig. 6(a) is set as the scale to be created, the node thinning-out unit performs the thinning-out process on the nodes shown in Fig. 6(b).
In the example of Fig. 6(b), in the line segments formed of the node B5 and so on, the node B5 is determined as the target for the thinning-out process, and the two nodes designated by ■ remain without being determined as the target for the thinning-out process.

Furthermore, in the case of drawing a map of a wide area (drawing a map with the scale to be created), because the area to display the closed region formed of the nodes B1 to B4 is very small and it is therefore difficult to carry out accurate drawing of the closed region, the closed region is eliminated.
As a result, the nodes B1 to B4 are determined as the target for the thinning-out process.
When determining whether or not the area to display the closed region is very small, for example, a reference area corresponding to the scale to be created (the smaller scale to be created is set, the larger area value is selected as the reference area) is compared with the area to display the closed region, and it can be determined that the area to display the closed region is very small when the area to display the closed region is smaller than the reference area.

After the node thinning-out unit 12 carries out the thinning-out process of thinning out the nodes, the hierarchical graph forming unit 13 carries out the process of grouping the nodes on which the thinning-out process has not been performed yet and the nodes on which the thinning-out process has been performed by the node thinning-out unit 12 into hierarchical layers according to the scale, and expressing a connection relation between a hierarchical layer to which each of the nodes belongs and the nodes by using a graph (step ST5), like that of above-mentioned Embodiment 1.
Because the scale shown in Fig. 6(a) is set as the scale to be created and the nodes B1 to B5 have been removed at this time, the nodes B1 to B5 are classified as those belonging to a middle hierarchical layer and are arranged in the middle hierarchical layer, as shown in Fig. 7(b).

Because the three levels of scale are provided in the example of Fig. 6, the two nodes (the nodes A1 and A2) designated by ■ in Fig. 6(b) are automatically classified as those belonging to the highest hierarchical layer and are arranged in the highest hierarchical layer.
Because the two nodes (the nodes A1 and A2) designated by ■ in Fig. 6(b) are classified as those belonging to the highest hierarchical layer, and the lower nodes C9 and C11 having a connection relation with the nodes A1 and A2 are then apart from the nodes A1 and A2 by two hierarchical layers, dummy nodes D1 and D2 are arranged in the middle hierarchical layer on behalf of the two nodes A1 and A2.
Furthermore, because the closed region formed of the nodes B1 to B4 is eliminated and the nodes B1 to B4 are then apart from the (root) node by two hierarchical layers, a proxy node PD1 is arranged in the highest hierarchical layer.

After arranging the nodes B1 to B5 and the dummy nodes D1 and D2 in the middle hierarchical layer and then arranging the nodes A1 and A2 and the proxy node PD1 in the highest hierarchical layer, the hierarchical graph forming unit 13 expresses the connection relation among the nodes B1 to B5, the dummy nodes D1 and D2, the nodes A1 and A2, and the proxy node PD1 by using a graph.
For example, because the node B1 has a connection relation with the proxy node PD1 in the upper hierarchical layer, the hierarchical graph forming unit connects between the node B1 and the proxy node PD1 with a line. Furthermore, because the node B1 has a connection relation with the nodes B2 and B4 in the same hierarchical layer, the hierarchical graph forming unit connects between the node B1 and each of the nodes B2 and B4 with a line. In addition, because the node B1 has a connection relation with the nodes C1 and C4 in the lower hierarchical layer, the hierarchical graph forming unit connects between the node B1 and each of the nodes C1 and C4 with a line.
For example, because the dummy node D1 has a connection relation with the node A1 in the upper hierarchical layer, the hierarchical graph forming unit connects between the dummy node D1 and the node A1 with a line. Furthermore, because the dummy node D1 has a connection relation with the node C9 in the lower hierarchical layer, the hierarchical graph forming unit connects between the dummy node D1 and the node C9 with a line.

For example, because the node A1 has a connection relation with the node A2 in the same hierarchical layer, the hierarchical graph forming unit connects between the node A1 and the node A2 with a line. Furthermore, because the node A1 has a connection relation with the node B5 and the dummy node D1 in the lower hierarchical layer, the hierarchical graph forming unit connects between the node A1 and each of the node B5 and the dummy node D1 with a line. In addition, because the node A1 is in the highest hierarchical layer, the hierarchical graph forming unit connects between the node A1 and the (root) node with a line.
For example, because the proxy node PD1 has a connection relation with the nodes B1, B2, B3 and B4 in the lower hierarchical layer, the hierarchical graph forming unit connects between the proxy node PD1 and each of the nodes B5 B1, B2, B3 and B4 with a line. In addition, because the proxy node PD1 is in the highest hierarchical layer, the hierarchical graph forming unit connects between the proxy node PD1 and the (root) node with a line.
By then doing in the same way, the hierarchical graph forming unit expresses the connection relation among all of the nodes arranged in the middle hierarchical layer and those in the highest hierarchical layer by using a graph.

After the hierarchical graph forming unit 13 arranges the nodes B1 to B5 and the dummy nodes D1 and D2 in the middle hierarchical layer and also arranges the nodes A1 and A2 and the proxy node PD1 in the highest hierarchical layer, and then expresses the connection relation among the nodes B1 to B5, the dummy nodes D1 and D2, the nodes A1 to A4 and the proxy node PD1 by using a graph, the node thinning-out unit 12 determines whether or not the scale to be created is the scale for widest regional map (step ST6).
At this time, because the scale to be created is the scale shown in Fig. 6(a), the node thinning-out unit determines that the scale to be created is the scale for widest regional map and makes a transition to a process of step ST7.

After the hierarchical graph forming unit 13 expresses the connection relation among all the nodes by using a graph, the data converting unit 14 converts data about the graph (data showing the arrangement of each of the nodes and data showing the connection relation among the nodes) into data in a predetermined form to create connection destination information as shown in Fig. 8 (step ST7), like that of above-mentioned Embodiment 1.
The connection destination information shows nodes to which each node belonging to each of the hierarchical layers is connected, as shown in Fig. 8, and includes information showing the levels (an upper level, the same level, and a lower level) of hierarchical layers in each of which a node to which each node belonging to each of the hierarchical layers is connected is placed.

For example, the connection destination information about the node C2 belonging to the lowest hierarchical layer shows that the node C2 is connected to the node C3 in the same hierarchical layer and is also connected to the node B2 in the middle hierarchical layer.
For example, the connection destination information about the node B1 belonging to the middle hierarchical layer shows that the node B1 is connected to the nodes B2 and B4 in the same hierarchical layer, is also connected to the nodes C1 and C4 in the lowest hierarchical layer, and is further connected to the proxy node PD1 in the highest hierarchical layer.

After the data converting unit 14 creates the connection destination information, the connection destination information writing unit 15 stores the connection destination information in the map data recorder 2 as map data, like that of above-mentioned Embodiment 1.
The map drawing unit 16 is provided with the interface for accepting a specification of a desired scale, and refers to the connection destination information about each of nodes belonging to the hierarchical layer corresponding to the desired scale, the connection destination information being included in the connection destination information recorded in the map data recorder 2, to draw a map on the display 17.
For example, when the scale shown in Fig. 6(c) is specified, the map drawing unit refers to the connection destination information about each of the nodes C1 to C11 belonging to the lowest hierarchical layer. More specifically, the map drawing unit checks nodes placed in the same hierarchical layer as that in which the nodes C1 to C11 are arranged, and connected to each of the nodes C1 to C11, and the nodes in the upper hierarchical layers to draw a map having the scale shown in Fig. 6(c).

When the scale shown in Fig. 6(b) is specified, the map drawing unit refers to the connection destination information about each of the nodes B1 to B5 belonging to the middle hierarchical layer. More specifically, the map drawing unit checks nodes placed in the same hierarchical layer as that in which the nodes B1 to B5 are arranged, and connected to each of the nodes B1 to B5, and the nodes in the upper hierarchical layer to draw a map having the scale shown in Fig. 6(b).
When the scale of Fig. 6(a) is specified, the map drawing unit refers to the connection destination information about each of the nodes A1 and A2 belonging to the highest hierarchical layer. More specifically, the map drawing unit checks nodes placed in the same hierarchical layer as that in which the nodes A1 and A2 are arranged, and connected to each of the nodes A1 and A2 to draw a map having the scale shown in Fig. 6(a).

As can be seen from the above description, even when a closed region which is disposed independently from other line segments are included in the map data, this embodiment offers an advantage of being able to create map data which can support a plurality of scales and express complicated-shaped roads and complicated-shaped geographical features, like above-mentioned Embodiment 1.

In above-mentioned Embodiments 1 and 2, the case in which the three levels of scale are provided is shown. This case is just an example and four or more scales can be provided.

### Industrial Applicability

As mentioned above, the map data creating device in accordance with the present invention is suitable for use in a car navigation device or the like which needs to draw a map having one of a plurality of scales from single map data without preparing map data about each of the scales.

## Claims

1. A map data creating device comprising:
a map data acquiring means for acquiring map data about a map having a specific scale;
a node thinning-out means for carrying out a process of thinning out nodes constructing line segments included in the map data acquired by said map data acquiring means, the nodes excluding branch points, according to a scale to be created which is smaller than the specific scale; and
a connection destination information creating means for grouping the nodes on which the thinning-out process has not been performed yet and the nodes on which the thinning-out process has been performed by said node thinning-out means into hierarchical layers according to the scale, and for creating connection destination information showing nodes to which each node belonging to each of the hierarchical layers is connected.

2. The map data creating device according to claim 1, wherein in the connection destination information creating means, the nodes to which each node belonging to each of the hierarchical levels is connected include a node belonging to an upper hierarchical layer, a node belonging to a same hierarchical layer, or a node belonging to a lower hierarchical layer.

3. The map data creating device according to claim 2, wherein when creating the connection destination information showing the nodes to which each node belonging to each of the hierarchical layers is connected, the connection destination information creating means includes information showing a level of a hierarchical layer in which each of the nodes to which each node belonging to each of the hierarchical layers is connected is placed in the connection destination information.

4. The map data creating device according to claim 1, wherein the connection destination information creating means expresses a connection relation among nodes belonging to each hierarchical layer by using a graph and converts data about said graph into data in a predetermined form to create the connection destination information.

5. The map data creating device according to claim 4, wherein when expressing the connection relation among the nodes belonging to each hierarchical layer by using the graph, if a node belonging to a hierarchical layer is connected to a node belonging to an upper hierarchical layer or a lower hierarchical layer which is distant from said hierarchical layer by two or more hierarchical layers, the connection destination information creating means arranges a dummy node in a middle hierarchical layer and expresses the node belonging to the hierarchical layer in such a way that the node is connected to the node belonging to said upper hierarchical layer or said lower hierarchical layer via said dummy node.

6. The map data creating device according to claim 5, wherein when the node belonging to the hierarchical layer is connected to the node belonging to the upper hierarchical layer via the dummy node, the connection destination information creating means creates connection destination information showing that the node belonging to the hierarchical layer is connected to the node belonging to said upper hierarchical layer.

7. The map data creating device according to claim 1, wherein when a plurality of closed regions each comprised of a plurality of nodes are adjacent to one another, the node thinning-out means unifies the plurality of closed regions.

8. The map data creating device according to claim 4, wherein when thinning out all nodes in a closed region comprised of a plurality of nodes, the node thinning-out means arranges a proxy node showing said closed region on the graph.

9. The map data creating device according to claim 1, wherein the node thinning-out means determines nodes to be removed according to both the scale to be created and a distance between adjacent nodes.

10. A map drawing device comprising:
a map data acquiring means for acquiring map data about a map having a specific scale;
a node thinning-out means for carrying out a process of thinning out nodes constructing line segments included in the map data acquired by said map data acquiring means, the nodes excluding branch points, according to a scale to be created which is smaller than the specific scale;
a connection destination information creating means for grouping the nodes on which the thinning-out process has not been performed yet and the nodes on which the thinning-out process has been performed by said node thinning-out means into hierarchical layers according to the scale, and for creating connection destination information showing nodes to which each node belonging to each of the hierarchical layers is connected; and
a map drawing means for drawing a map with reference to connection destination information about nodes belonging to a hierarchical layer corresponding to a desired scale, the connection destination information being included in the connection destination information created by said connection destination information creating means.
